# EUROPEAN PATENT SPECIFICATION

(11) **EP 2 971 824 B1**
(45) Date of publication and mention of the grant of the patent: **18.12.2019**
(21) Application number: 14719080.5
(22) Date of filing: 10.03.2014
(51) Int. Cl.: F16D 1/10

(54) **METHOD FOR MAKING A PRECISION COUPLING BETWEEN A PUMP SHAFT AND A HOLLOW MEMBER, AND HOLLOW MEMBER AND PUMP SHAFT MECHANICAL COUPLED TOGETHER**
VERFAHREN ZUR HERSTELLUNG EINER PRÄZISIONSVERBINDUNG ZWISCHEN EINEM PUMPENSCHAFT UND EINEM HOHLKÖRPER SOWIE MECHANISCH MIT DEM HOHLKÖRPER VERBUNDENER PUMPENSCHAFT
PROCÉDÉ POUR RÉALISER UN ACCOUPLEMENT DE PRÉCISION ENTRE UN ARBRE DE POMPE ET UN ÉLÉMENT CREUX, ET ÉLÉMENT CREUX ET ARBRE DE POMPE MÉCANIQUEMENT COUPLÉS L'UN À L'AUTRE

(30) Priority: 11.03.2013 IT BO20130102
(43) Date of publication of application: 20.01.2016
(73) Proprietor: Caprari S.p.A., 41123 Modena (IT)
(72) Inventor: FERRI, Marco, I-41123 Modena (IT)
(74) Representative: Manzella & Associati
(86) International application number: PCT/IB2014/059591
(87) International publication number: WO 2014/141044

(56) References cited:
- EP-A1- 1 900 951
- WO-A1-2009/029574
- GB-A- 668 092
- JP-A- H11 108 070

## Description

### Technical Field

The present invention concerns a method for making a precision coupling between a pump shaft and a hollow member or hub of a pump member.

### Background Art

It has been known that for transmitting in an efficient way high torques between a pump shaft of a pump member and a hollow member or hub, usually an impeller, means for mechanical connection of the type of the keys are used.

Furthermore, for very high torques, connections of the type of ribbed profiles are used. Such connections are substantially equal, from a functional point of view, to a series of multiple keys, distributed on the external circumference of the shaft and, correspondently, on the circumference of the internal cavity of the hub. Therefore, the connection through ribbed profile is able to ensure an efficient transmission of high torques.

For example, international patent application WO 2010/141490 discloses a connection between shaft and hub through involute ribbed profile. The specific described profile is shaped so as to improve the distribution of the stresses resulting from the applied torque.

The connection through ribbed profiles has anyway some drawbacks which can arise in case the centering of the involved mechanic members is not precise enough. Hence, in such case, the perfect balancing of the rotating members can be compromised, thus producing radial dynamic forces which can compromise the reliability and the safety of the apparatus in which such mechanical coupling is used.

JP H11 108070 discloses a fitting structure and a fitting method for shaft members, intended to relax the concentration of stress between coupled shaft members. The structure includes first press-in parts and a second press-in parts where plastic deformation occurs.

In order to overcome such drawbacks, usually the coupled ribbed profiles are produced with a high degree of precision, so as to produce a coupling with a reduced play at the inner diameter of the shaft, that is at the foot of the tooth, or at the external diameter of the shaft, that is at the head of the tooth, or, as well, at the sides. Anyway, such solutions for solving the centering problem result expensive, since they require mechanical processing having a high degree of precision of profiles with a complex shape, usually on both the shaft and the hub. Such processing, in particular, requires the use of suitable cut tools per se expensive, and complex mechanical working.

Moreover, it is to be observed that the same centering solutions are not suitable to be used in coupling between shaft and impeller of centrifugal pumps. For such uses, in fact, the aggressiveness of the working environment, full of water, can create encrustations on the coupled mechanic parts, which make difficult or even impossible the required disassembly of the parts in case of maintenance.

### Disclosure

The task of the present invention is that of solving the aforementioned problems, by devising a method for making a precision coupling between a pump shaft and a hollow member or hub, which enables a reliable functioning, by optimizing the balancing of the mechanical parts.

Within such task, it is a further scope of the present invention that of providing a hollow member or hub coupled with a pump shaft of a pump member, ensuring an optimal functioning in every field of use.

A further scope of the invention is that of providing a mechanical coupling comprising a hollow member and a pump shaft, which allows a reliable and safe functioning in a centrifugal pump.

The cited scopes are attained according to the present invention by the method for making a precision coupling according to claim 1, as well as by a precision coupling between a pump shaft and a hollow member for a pump member according to claim 9.

The method for making a precision coupling between a pump shaft and a hollow member or hub allows to obtain any degree of precision required for the coupling, thus minimizing the manufacture costs.

As a matter o facts, according to a feature of the invention, the method provides to limit the required precise manufacturing for coupling to a first number of protrusions of the ribbed profile, thus creating centering protrusions having a degree of precision such as to produce, for the coupling, a determined play, reduced with respect to a bigger coupling play.

A second remaining number of protrusions of the ribbed profile has the main task of transmitting the force, by means of a different transmission sizing, suitable to produce on the pump shaft the cited bigger play, with a lower degree of precision. In practice, for transmission protrusion it is possible to use a less accurate manufacturing process, thus less expensive.

More precisely, the method provides to prearrange a hollow member provided with a substantially cylindrical central cavity and to make at said central cavity a ribbed profile comprising a plurality of distributed protrusions, preferably involute teeth. The above mentioned step of making the ribbed profile provides to apply a centering sizing, destined to obtain the degree of precision required for the coupling, at the cited first number of centering protrusions and a transmission sizing, different and preferably less precise, for the said remaining transmission protrusions.

In practice, the above mentioned centering sizing is preferably located in determined zones of the centering protrusions, for obtaining limitedly to such zones a coupling with reduced play such as to ensure the correct and efficient centering between the pump shaft and the hollow member or hub both in static and dynamic conditions.

Details of the invention shall be more apparent from the detailed description of a preferred embodiment of the mechanical coupling suitable to be made through the method according to the invention, illustrated for indicative purposes in the attached drawings, wherein:

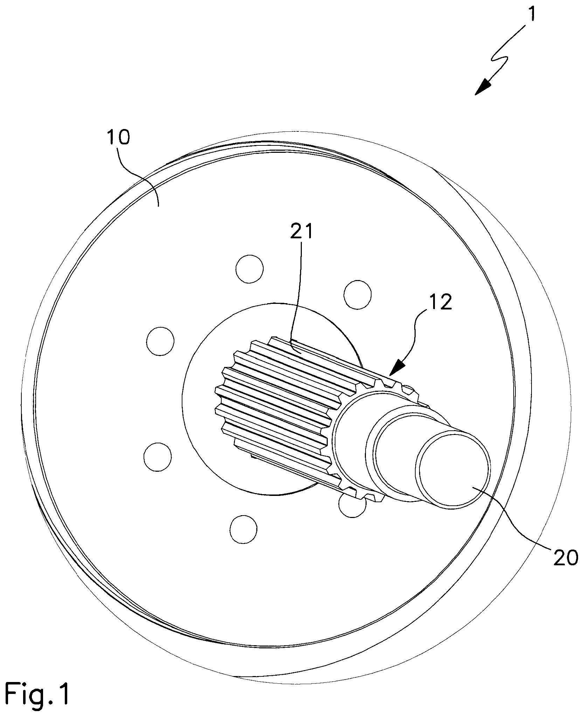

figures 1 and 2 respectively show a perspective view and a front view of a mechanical coupling according to the invention;

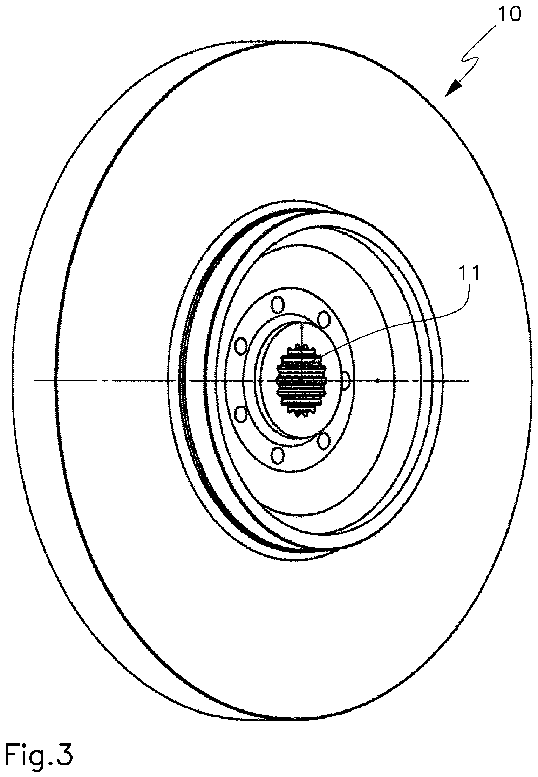

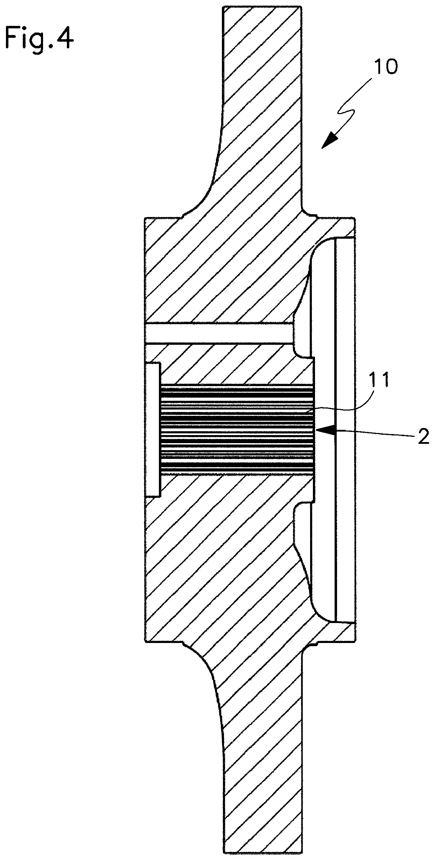

Figures 3 and 4 respectively show a perspective and an axial cross-view of a hollow member made according to the invention;
Figure 5 shows an axial cross-section view of a centrifugal pump in which the mechanical coupling according to the invention is used;
Figures 6 to 8 respectively show a front, axial cross-section view according to the plane VII-VII indicated in figure 6, and perspective view of a hollow member made according to a further embodiment of the invention;
Figure 9 shows a centrifugal pump in which the hollow member used in figures 6 to 8 is used.

### Best Mode

With particular reference to such figures, the mechanical coupling according to the invention has been indicated for more clarity in its entirety with 1.

The mechanical coupling 1 comprises a hollow member 10 and a full member 20 suitable to be coupled for allowing the transmission of a torque. The hollow member 10 or hub shapes a central cavity, on which internal surface a ribbed profile 11 is provided comprising a series of radial protrusions 12 distributed about the same central cavity 2.

The full member 20 shapes a conjugated ribbed profile 21 comprising a corresponding series of conjugated radial protrusions 22 distributed on its external surface.

As an example, in the case illustrated in figures from 1 to 4, the ribbed profile 11 of the hollow member 10 or hub comprises eighteen protrusions 12, preferably shaped by involute teeth. In correspondent way, in the same case the conjugated grooved profile 21 of the full member 20 or pump shaft comprises eighteen conjugated protrusions 21 of the same type, that is involute teeth.

Anyway, the ribbed profiles 11, 21 which are destined to shape the mechanical coupling according to the invention can be provided with a different number of protrusions of teeth, as well as with a profile of different shape, provided that it is suitable for the transmission of the force.

Each protrusion 12 shapes different zones, each suitably sized according to the kind of coupling to be made. More precisely each protrusion 12 or tooth has a foot zone 13 at the concavity of the profile 11 and a head zone 14, at the convexity of the profile.

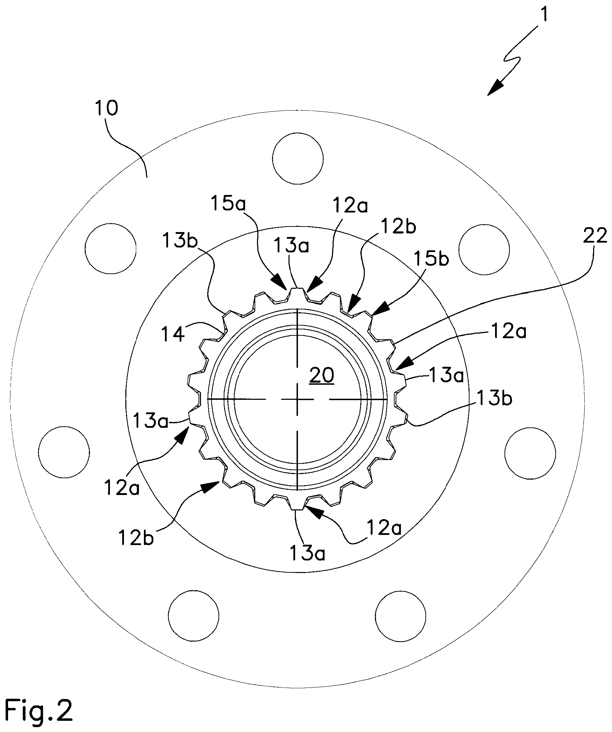

The ribbed profile 11 of the hollow member 10 thus provides a differentiated sizing and, preferably, differentiated grades of tolerance for the protrusions 12. More precisely, a selected part corresponding to a determined number of protrusions 12a has, at least for a respective zone 13a, a centering sizing. The remaining part or number of protrusions 12b has instead, for the corresponding zone 13b, a transmission sizing (see figure 2).

In the illustrated case, the zones 13a of the centering protrusions 12a of the ribbed profile 11 are the zone of the foot of the tooth. In practice, in order to ensure a correct centering between the full member 20 and the hollow member 10, the centering sizing of the centering zones 13a, corresponding to the size of the diameter of the hollow member 10 at the foot of the protrusions 12a, is such as to produce, when coupling with the corresponding conjugated profile 21 of the shaft 20, a centering play 15a reduced with respect to the coupling play 15b created in the corresponding zones 13b of the remaining protrusions 12b.

The remaining protrusions 12b provide for the corresponding zones 13b at the foot of the tooth a transmission sizing, which is able to make the cited play 15b larger than the reduced centering play 15a. Such larger coupling play 15b is suitable to allow an easy coupling of the hollow member 10 with the full member 20, and an easy disassembly for the maintenance operations, further than, at the same time, an efficient transmission of the torque, with a reduction of the correspondent overall notching effect on the transmission.

In the illustrated case, thus, the zones 13a at the foot of the selected centering teeth 12a are made with a diameter smaller than the zones 13b at the foot of the remaining transmission teeth 12b. The corresponding conjugated profile 21 of the hollow member 20 can instead be of traditional type, that is it can shape a same sizing for the head diameter of the respective conjugated protrusions 22. Therefore, the mechanical coupling 1 shaped by the described hollow member 10 and by the full member 20 has the cited centering play 15a reduced only at the zones 13a and the transmission play 15b larger at the remaining zones 13b (see figure 2).

The zones 13a of the selected centering protrusions 12a are preferably made with a centering grade of tolerance, such as to ensure as a result the reduced centering play 15a having the desired accuracy and precision.

On the contrary, the zones 13b of the remaining transmission protrusions 12b can be made with a different transmission grade of tolerance, having a lesser precision, thus reducing the overall production costs.

With reference to the full member 20 or shaft, uniform size and uniform grades of tolerance can be provided for the corresponding zones of the conjugated protrusions 22, since the centering function is substantially given, according to the invention, to the centering protrusions 12a of the hollow member 10 and, in particular to the respective zones 13a.

In substance, the accuracy of the mechanical manufacturing and therefore the degree of precision required for the mechanical coupling 1 are concentrated in the zones 13a of the selected centering protrusions 12a, thus reducing the production costs for making the hollow member 10, as well as the costs of the mechanical coupling 1 in its entirely.

In the illustrated case, the centering protrusions 12a are reduced to four, reciprocally opposed with respect to the longitudinal axis of the hollow member 10, so as to ensure the static and dynamic balancing of the overall mechanical coupling 1.

It is preferable that the number of centering protrusions 12a substantially is a number greater or equal to three, or preferably equal to one quarter of the total number of protrusions 12 or teeth. Such proportion allows an optimal balancing of the hollow member 10.

Moreover, it is necessary to observe that the selected zones 13a are preferably located at the foot of the tooth of the ribbed profile. Such circumstance allows to ease mechanical workings, providing a cut tool for the profile, usually a broach, made in traditional way, except for the fact that it provides a differentiated sizing, that is a smaller diameter for the cut protrusions destined to shape the foot of the centering protrusion 12a. In substance, such cut protrusions of the broach are suitably ground on a diameter different with respect to the cut protrusions suitable to make the transmission zones. As a consequence, the so obtained centering zones 13a ensure the required precision for the coupling 1, while the remaining portion of the ribbed profile 11 is mainly destined to perform the force transmission work.

For manufacturing the full member 20 suitable to be coupled with the hollow member 10 it is instead preferable to use ribbed profiles 21 obtained with a grade of tolerance not higher than the average grade of tolerance, uniform for the whole profile and/or anyway normalized. As a consequence, the full member 20 can be easily found on the market, without requiring special manufacturing.

The functioning of the method for manufacturing the mechanical coupling, and of the mechanical coupling itself, according to the invention, are easy to understand from the preceding description.

In a manufacturing step, the hollow member 10 provided with the substantially cylindrical central cavity 2 is prepared. At said central cavity 2 the ribbed profile 11 is made, creating the centering protrusions 12a and the transmission protrusions 12b with a differentiated sizing, as it was previously disclosed.

Then the full member 20 is prepared, provided with a same total number of conjugated protrusions 22 with a substantially undifferentiated sizing.

The hollow member 10 is then coupled with the full member 20. Between the above mentioned members 10, 20 the reduced centering play 15a is created at the centering protrusions 12a of the hollow member while the transmission play 15b is created at the transmission protrusions 12b of the hollow member 10.

The disclosed coupling 1 can then be used for transmitting a torque, for example from the shaft 20 to the hub 10, as it is in case of a pump member, in which the hub 10 carries an impeller. The centering play 15a allows a balanced centering with the required precision, while the transmission play 15b ensures an easy coupling in any condition. High forces can then be transmitted through a plurality of protrusions of the coupled conjugated profiles 11, 21.

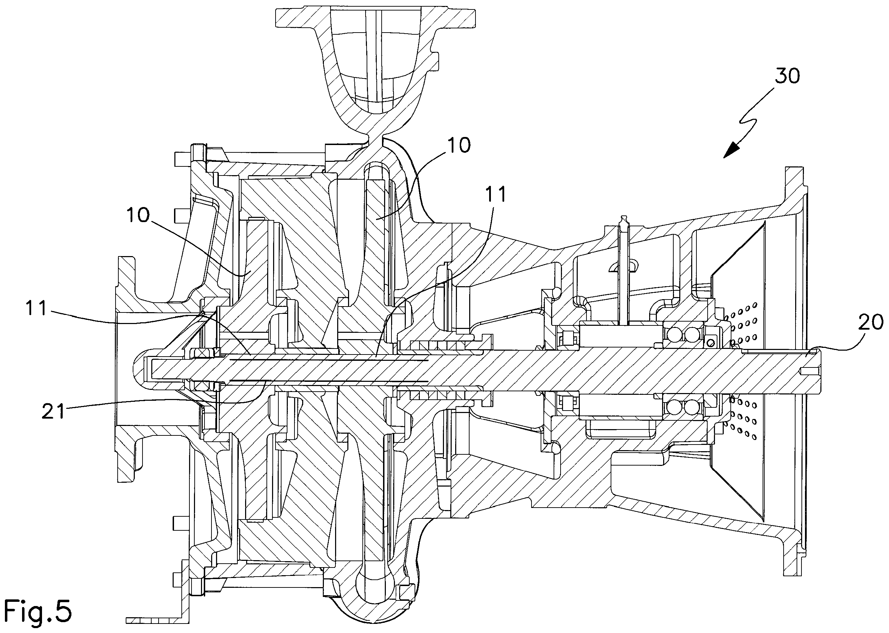

According to a preferred embodiment of the invention disclosed in figure 5, the hollow member 10 shapes an impeller suitable to be used in a pump member 30, while the shaft 20 shapes the pump shaft with which one or more impellers 10 are suitable to be coupled. In the illustrated case the pump member 30 comprises a couple of impellers 10 coupled with the same pump shaft 20.

The impellers 10 shape the grooved profile 11 as it was previously described, with a differentiated sizing, at the respective central cavity. The pump shaft 20 shapes the ribbed profile 21 preferably normalized.

The use of the coupling 1 is particularly advantageous in the illustrated case, as it allows to keep an optimal centering even in presence of a full member 20 or pump shaft longitudinally extended and then destined to couple with one or more impellers 10 with the same precision. This is enabled by the fact that the accuracy of the centering is substantially given by the ribbed profile of the impellers 10. Moreover, only one part of such profile, relative to the cited centering protrusions, is sized for the precise centering, while the remaining part is possibly sized with a wider coupling play, for easing the coupling.

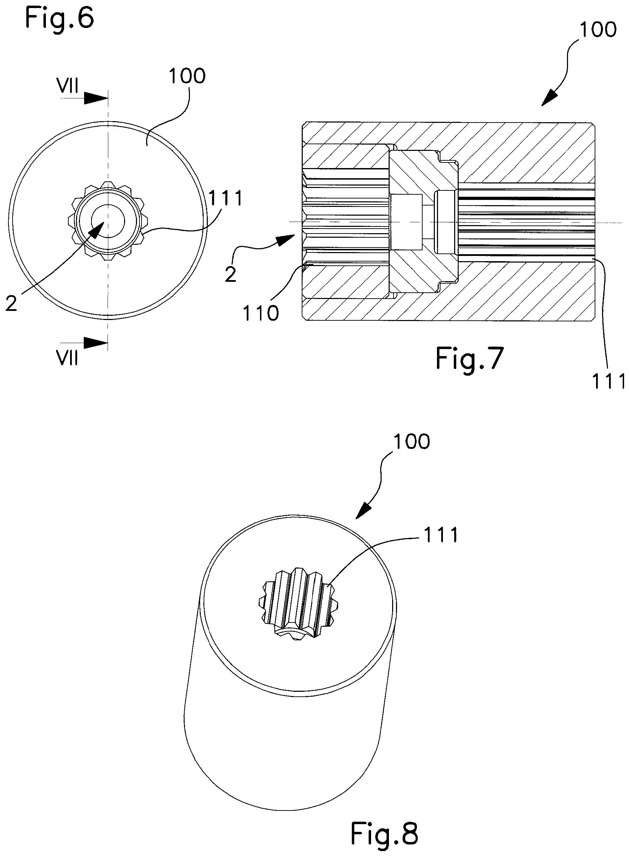

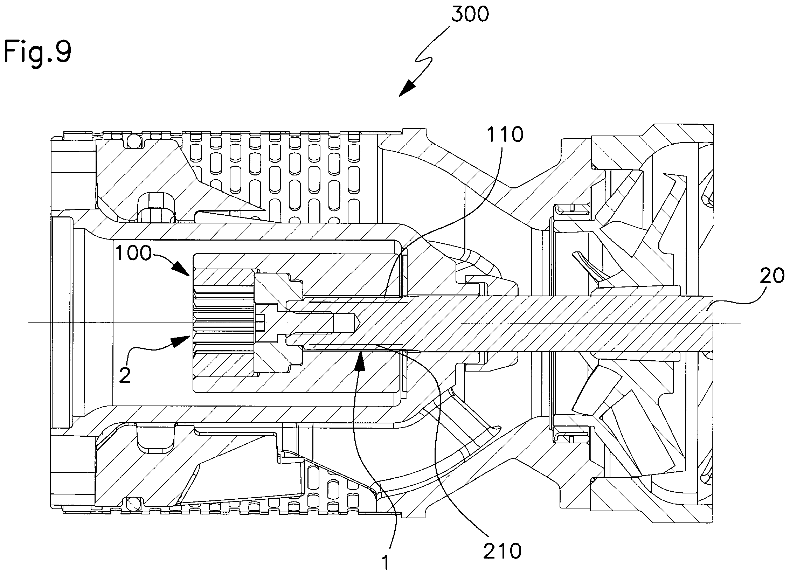

According to a further embodiment shown in figures 6 to 9, the hollow member 100 shapes a coupling joint for a couple of full members or shafts 20. The central cavity 2 of the hollow member 100 shapes a first ribbed profile 110, open on a side, and a second ribbed profile 111, open on the opposite side. Therefore the joint 100 can be used for coupling with and centering, on one side, for example through the first ribbed profile 110, the pump shaft 20 of a pump member 300 for example of submerged type and on the other side, through the second ribbed profile 111, the shaft of a motor member, not represented, for operating the pump member 300.

The use of the coupling 1 according to the invention on each side of the joint 100 is particularly advantageous, since it allows the correct centering of a couple of shafts, for drawing the coupled impellers of the pump shaft 20.

In practice, the embodiment of the invention, the materials used, as well as the shape and dimensions, may vary depending on the requirements.

Should the technical characteristics mentioned in each claim be followed by reference signs, such reference signs were included strictly with the aim of enhancing the understanding the claims and hence they shall not be deemed restrictive in any manner whatsoever on the scope of each element identified for exemplifying purposes by such reference signs.

## Claims

1. Method for making a precision coupling between a pump shaft (20, 200) and a hollow member (10, 100) for a pump member (30, 300), **characterized in that** it comprises the steps of:
a. prearranging a said hollow member (10, 100) comprising a substantially cylindrical central cavity (2) and intended for being coupled with a said pump shaft (20);
b. making at said central cavity (2) a ribbed profile (11, 110, 111) comprising a plurality of protrusions (12) distributed around said central cavity (2), said protrusions (12) comprising a first number of centering protrusions (12a) made according to a centering sizing and a second number of transmission protrusions (12b) made according to a transmission sizing different with respect to said centering sizing, said centering sizing being suitable to produce in the coupling with said pump shaft (20, 200) a centering play (15a) reduced with respect to a coupling play (15b) produced by said transmission sizing;
c. prearranging said hollow member (10, 100) for its coupling with said pump shaft (20, 200) carrying on its external surface a conjugate ribbed profile (21) having respective conjugated protrusions (22).

2. Method according to claim 1, **characterized in that** said centering protrusions (12a) having said centering sizing are made with a same centering grade of tolerance, differentiated and more precise with respect to the grade of tolerance provided for the remaining transmission protrusions (12b) of said hollow member (10, 100).

3. Method according to claim 2, **characterized in that** said centering sizing of said centering protrusions (12a) is limited to respective zones (13a) of said centering protrusions (12a).

4. Method according to claim 3, **characterized in that** said zones (13a) having said centering sizing are located at the foot of said centering protrusions (12a) of said hollow member (10, 100).

5. Method according to one of the previous claims, **characterized in that** said centering protrusions (12a) are distributed in a substantially uniform manner around said central cavity (2) of said hollow member (10, 100), so as to ensure the correct balancing of the coupling with said pump shaft (20).

6. Method according to claim 5, **characterized in that** said determined number of centering protrusions (12a) is equal to a number greater or equal to three or substantially one fourth of the total number of protrusions or teeth (12) of the said ribbed profile (11, 110, 111) of said hollow member (10, 100).

7. Method according to one of the previous claims, **characterized in that** said protrusions (12) of said ribbed profile (11, 110, 111) shape teeth with involute profile.

8. Method according to one of the previous claims, **characterized in that** said pump shaft (20) shapes a standardized toothing made with an undifferentiated sizing of said respective conjugated protrusions (22).

9. Precision coupling between a pump shaft (20, 200) and a hollow member (10, 100) for a pump member (30,300)), said hollow member (10, 100) having a substantially cylindrical central cavity (2) shaping a ribbed profile (11, 110, 111) carrying a plurality of protrusions (12) and said pump shaft (20, 200) having a conjugated ribbed profile (21) carrying respective conjugated protrusions (22), **characterized in that** said ribbed profile (11, 110, 111) of said hollow member (10, 100) comprises a first number of centering protrusions (12a) having a centering sizing and a second number of transmission protrusions (12b) having a transmission sizing, different with respect to said centering sizing, said centering sizing producing in the coupling with said pump shaft (20, 200) a centering play (15a) reduced with respect to a coupling play (15b) produced by said transmission sizing, for the centering on said pump shaft (20, 200).

10. Precision coupling between a pump shaft (20, 200) and a hollow member (10, 100) according to claim 9, **characterized in that** said centering protrusions (12a) having said centering sizing are made with a same grade of tolerance, different and more precise with respect to the grade of tolerance used for making said remaining transmission protrusions (12b) of said hollow member (10, 100).

11. Precision coupling between a pump shaft (20, 200) and a hollow member (10, 100) according to claim 10, **characterized in that** said centering sizing is provided in respective zones (13a) of said centering protrusions (12a).

12. Precision coupling between a pump shaft (20, 200) and a hollow member (10, 100) according to claim 11, **characterized in that** said zones (13a) of said centering protrusions (12a) are located at the foot of said protrusions (12a).

13. Precision coupling between a pump shaft (20, 200) and a hollow member (10, 100) according to one of the claims 9 to 12, **characterized in that** said first number of centering protrusions (12a) is uniformly distributed around said central cavity (2).

14. Precision coupling between a pump shaft (20, 200) and a hollow member (10, 100) according to one of claims 9 to 13, **characterized in that** said first number of centering protrusions (12a) is equal to a number greater or equal to three or substantially one fourth of the total number of protrusions (12).

15. Precision coupling between a pump shaft (20, 200) and a hollow member (10, 100) according to one of claims 9 to 14, **characterized in that** said protrusions (12) and said conjugated protrusions (22) shape involute teeth.

16. Precision coupling between a pump shaft (20, 200) and a hollow member (10, 100) according to one of claims 9 to 15, **characterized in that** said conjugated ribbed profile (21) of said pump shaft (20, 200) has respective conjugated protrusions (22) made with an undifferentiated sizing.

## Patentansprüche

1. Verfahren zum Herstellen einer Präzisionskopplung zwischen einer Pumpenwelle (20, 200) und einem hohlen Element (10, 100) für ein Pumpenelement (30, 300), **dadurch gekennzeichnet, dass** es die folgenden Schritte umfasst:
a. vorab Anordnen des hohlen Elements (10, 100), das einen im Wesentlichen zylindrischen zentralen Hohlraum (2) umfasst und an die Pumpenwelle (20) gekoppelt werden soll;
b. Herstellen eines gerippten Profils (11, 110, 111) im zentralen Hohlraum (2), das eine Vielzahl von Vorsprüngen (12) umfasst, die um den zentralen Hohlraum (2) verteilt sind, wobei die Vorsprünge (12) eine erste Anzahl von Zentrierungsvorsprüngen (12a), die gemäß einer Zentrierungsgröße hergestellt sind, und eine zweite Anzahl von Übertragungsvorsprüngen (12b), die gemäß einer Übertragungsgröße, die sich mit Bezug auf die Zentrierungsgröße unterscheidet, umfassen, wobei die Zentrierungsgröße geeignet ist, bei der Kopplung mit der Pumpenwelle (20, 200) ein Zentrierungsspiel (15a) zu produzieren, das mit Bezug auf ein Kopplungsspiel (15b), das durch die Übertragungsgröße produziert wird, reduziert ist;
c. vorab Anordnen des hohlen Elements (10, 100) für dessen Kopplung mit der Pumpenwelle (20, 200), die auf ihrer Außenfläche ein konjugiertes geripptes Profil (21) trägt, das jeweilige konjugierte Vorsprünge (22) aufweist.

2. Verfahren nach Anspruch 1, **dadurch gekennzeichnet, dass** die Zentrierungsvorsprünge (12a), die die Zentrierungsgröße aufweisen, mit einem selben Zentrierungstoleranzgrad hergestellt sind, der mit Bezug auf den Toleranzgrad, der für die verbleibenden Übertragungsvorsprünge (12b) des hohlen Elements (10, 100) bereitgestellt ist, differenziert und präziser ist.

3. Verfahren nach Anspruch 2, **dadurch gekennzeichnet, dass** die Zentrierungsgröße der Zentrierungsvorsprünge (12a) auf jeweilige Zonen (13a) der Zentrierungsvorsprünge (12a) begrenzt ist.

4. Verfahren nach Anspruch 3, **dadurch gekennzeichnet, dass** sich die Zonen (13a), die die Zentrierungsgröße aufweisen, am Fuß der Zentrierungsvorsprünge (12a) des hohlen Elements (10, 100) befinden.

5. Verfahren nach einem der vorhergehenden Ansprüche, **dadurch gekennzeichnet, dass** die Zentrierungsvorsprünge (12a) in einer im Wesentlichen einheitlichen Weise um den zentralen Hohlraum (2) des hohlen Elements (10, 100) verteilt sind, um die korrekte Wuchtung der Kopplung mit der Pumpenwelle (20) sicherzustellen.

6. Verfahren nach Anspruch 5, **dadurch gekennzeichnet, dass** die bestimmte Anzahl von Zentrierungsvorsprüngen (12a) gleich einer Anzahl größer oder gleich drei oder im Wesentlichen ein Viertel der Gesamtzahl von Vorsprüngen oder Zähnen (12) des gerippten Profils (11, 110, 111) des hohlen Elements (10, 100) ist.

7. Verfahren nach einem der vorhergehenden Ansprüche, **dadurch gekennzeichnet, dass** die Vorsprünge (12) des gerippten Profils (11, 110, 111) Zähne mit einem Evolventenprofil formen.

8. Verfahren nach einem der vorhergehenden Ansprüche, **dadurch gekennzeichnet, dass** die Pumpenwelle (20) eine standardisierte Verzahnung formt, die mit einer undifferenzierten Größe der jeweiligen konjugierten Vorsprünge (22) hergestellt ist.

9. Präzisionskopplung zwischen einer Pumpenwelle (20, 200) und einem hohlen Element (10, 100) für ein Pumpenelement (30, 300), wobei das hohle Element (10, 100) einen im Wesentlichen zylindrischen zentralen Hohlraum (2) aufweist, der ein geripptes Profil (11, 110, 111) formt, das eine Vielzahl von Vorsprüngen (12) trägt, und wobei die Pumpenwelle (20, 200) ein konjugiertes geripptes Profil (21) aufweist, das jeweilige konjugierte Vorsprünge (22) trägt, **dadurch gekennzeichnet, dass** das gerippte Profil (11, 110, 111) des hohlen Elements (10, 100) eine erste Anzahl von Zentrierungsvorsprüngen (12a), die eine Zentrierungsgröße aufweisen, und eine zweite Anzahl von Übertragungsvorsprüngen (12b), die eine Übertragungsgröße aufweisen, die sich mit Bezug auf die Zentrierungsgröße unterscheidet, umfasst, wobei die Zentrierungsgröße bei der Kopplung mit der Pumpenwelle (20, 200) ein Zentrierungsspiel (15a), das mit Bezug auf ein Kopplungsspiel (15b), das durch die Übertragungsgröße produziert wird, reduziert ist, für die Zentrierung der Pumpenwelle (20, 200) produziert.

10. Präzisionskopplung zwischen einer Pumpenwelle (20, 200) und einem hohlen Element (10, 100) nach Anspruch 9, **dadurch gekennzeichnet, dass** die Zentrierungsvorsprünge (12a), die die Zentrierungsgröße aufweisen, mit einem selben Toleranzgrad hergestellt sind, der mit Bezug auf den Toleranzgrad, der bei der Herstellung der verbleibenden Übertragungsvorsprünge (12b) des hohlen Elements (10, 100) verwendet wird, verschieden und präziser ist.

11. Präzisionskopplung zwischen einer Pumpenwelle (20, 200) und einem hohlen Element (10, 100) nach Anspruch 10, **dadurch gekennzeichnet, dass** die Zentrierungsgröße in jeweiligen Zonen (13a) der Zentrierungsvorsprünge (12a) bereitgestellt ist.

12. Präzisionskopplung zwischen einer Pumpenwelle (20, 200) und einem hohlen Element (10, 100) nach Anspruch 11, **dadurch gekennzeichnet, dass** sich die Zonen (13a) der Zentrierungsvorsprünge (12a) am Fuß der Vorsprünge (12a) befinden.

13. Präzisionskopplung zwischen einer Pumpenwelle (20, 200) und einem hohlen Element (10, 100) nach einem der Ansprüche 9 bis 12, **dadurch gekennzeichnet, dass** die erste Anzahl von Zentrierungsvorsprüngen (12a) um den zentralen Hohlraum (2) einheitlich verteilt ist.

14. Präzisionskopplung zwischen einer Pumpenwelle (20, 200) und einem hohlen Element (10, 100) nach einem der Ansprüche 9 bis 13, **dadurch gekennzeichnet, dass** die erste Anzahl von Zentrierungsvorsprüngen (12a) gleich einer Anzahl größer oder gleich drei oder im Wesentlichen ein Viertel der Gesamtzahl von Vorsprüngen (12) ist.

15. Präzisionskopplung zwischen einer Pumpenwelle (20, 200) und einem hohlen Element (10, 100) nach einem der Ansprüche 9 bis 14, **dadurch gekennzeichnet, dass** die Vorsprünge (12) und die konjugierten Vorsprünge (22) Evolventenzähne formen.

16. Präzisionskopplung zwischen einer Pumpenwelle (20, 200) und einem hohlen Element (10, 100) nach einem der Ansprüche 9 bis 15, **dadurch gekennzeichnet, dass** das konjugierte gerippte Profil (21) der Pumpenwelle (20, 200) jeweilige konjugierte Vorsprünge (22) aufweist, die mit einer undifferenzierten Größe hergestellt sind.

## Revendications

1. Méthode pour réaliser un couplage de précision entre un arbre de la pompe (20, 200) et un élément creux (10, 100) pour un élément de la pompe (30, 300), **caractérisée par le fait qu'**elle comprend les étapes consistant à:
a. prédisposer un dit élément creux (10, 100) comprenant une cavité centrale (2) substantiellement cylindrique et destiné à être couplé à un dit arbre de la pompe (20) ;
b. réaliser au niveau de ladite cavité centrale (2) un profil nervuré (11, 110, 111) comprenant une pluralité de saillies (12) réparties autour de ladite cavité centrale (2), lesdites saillies (12) comprenant un premier nombre de saillies de centrage (12a) réalisé selon un dimensionnement de centrage et un deuxième nombre de saillies de transmission (12b) réalisé selon un dimensionnement de transmission différent par rapport audit dimensionnement de centrage, ledit dimensionnement de centrage étant apte à produire dans le couplage avec ledit arbre de la pompe (20, 200) un jeu de centrage (15a) réduit par rapport à un jeu de couplage (15b) produit par ledit dimensionnement de transmission ;
c. prédisposer ledit élément creux (10, 100) pour son couplage avec ledit arbre de la pompe (20, 200) portant sur sa surface externe un profil nervuré conjugué (21) ayant des respectives saillies conjuguées (22).

2. Méthode selon la revendication 1, **caractérisée par le fait que** lesdites saillies de centrage (12a) ayant ledit dimensionnement de centrage sont réalisées avec un même degré de tolérance de centrage, différencié et plus précis par rapport au degré de tolérance prévu pour les autres saillies de transmission (12b) dudit élément creux (10, 100).

3. Méthode selon la revendication 2, **caractérisée par le fait que** ledit dimensionnement de centrage desdites saillies de centrage (12a) est limité aux respectives zones (13a) desdites saillies de centrage (12a).

4. Méthode selon la revendication 3, **caractérisée par le fait que** lesdites zones (13a) ayant ledit dimensionnement de centrage sont situées aux pieds desdites saillies de centrage (12a) dudit élément creux (10, 100).

5. Méthode selon l'une des revendications précédentes, **caractérisée par le fait que** lesdites saillies de centrage (12a) sont réparties de manière substantiellement uniforme autour de ladite cavité centrale (2) dudit élément creux (10, 100), afin d'assurer le correct équilibre du couplage avec ledit arbre de la pompe (20).

6. Méthode selon la revendication 5, **caractérisée par le fait que** ledit nombre déterminé de saillies de centrage (12a) est égal à un nombre supérieur ou égal à trois ou substantiellement à un quart du nombre total de saillies ou dents (12) dudit profil nervuré (11, 110, 111) dudit élément creux (10, 100).

7. Méthode selon l'une des revendications précédentes, **caractérisée par le fait que** lesdites saillies (12) dudit profil nervuré (11, 110, 111) forment des dents avec un profil à développante.

8. Méthode selon l'une des revendications précédentes, **caractérisée par le fait que** ledit arbre de la pompe (20) forme une denture normalisée réalisée avec un dimensionnement indifférencié desdites respectives saillies conjuguées (22).

9. Couplage de précision entre un arbre de la pompe (20, 200) et un élément creux (10, 100) pour un élément de la pompe (30, 300), ledit élément creux (10, 100) ayant une cavité centrale (2) substantiellement cylindrique formant un profil nervuré (11, 110, 111) portant une pluralité de saillies (12) et ledit arbre de la pompe (20, 200) ayant un profil nervuré conjugué (21) portant des respectives saillies conjuguées (22), **caractérisée par le fait que** ledit profil nervuré (11, 110, 111) dudit élément creux (10, 100) comprend un premier nombre de saillies de centrage (12a) ayant un dimensionnement de centrage et un deuxième nombre de saillies de transmission (12b) ayant un dimensionnement de transmission, différent par rapport audit dimensionnement de centrage, ledit dimensionnement de centrage produisant dans le couplage avec ledit arbre de la pompe (20, 200) un jeu de centrage (15a) réduit par rapport à un jeu de couplage (15b) produit par ledit dimensionnement de transmission, pour le centrage sur ledit arbre de la pompe (20, 200).

10. Couplage de précision entre un arbre de la pompe (20, 200) et un élément creux (10, 100) selon la revendication 9, **caractérisé par le fait que** lesdites saillies de centrage (12a) ayant ledit dimensionnement de centrage sont réalisées avec un même degré de tolérance, différent et plus précis par rapport au degré de tolérance utilisé pour la réalisation desdites saillies de transmission (12b) dudit élément creux (10, 100).

11. Couplage de précision entre un arbre de la pompe (20, 200) et un élément creux (10, 100) selon la revendication 10, **caractérisé par le fait que** ledit dimensionnement de centrage est prévu dans des respectives zones (13a) desdites saillies de centrage (12a).

12. Couplage de précision entre un arbre de la pompe (20, 200) et un élément creux (10, 100) selon la revendication 11, **caractérisé par le fait que** lesdites zones (13a) desdites saillies de centrage (12a) sont situées aux pieds desdites saillies (12a).

13. Couplage de précision entre un arbre de la pompe (20, 200) et un élément creux (10, 100) selon une des revendications de 9 à 12, **caractérisé par le fait que** ledit premier nombre de saillies de centrage (12a) est reparti de manière uniforme autour de ladite cavité centrale (2).

14. Couplage de précision entre un arbre de la pompe (20, 200) et un élément creux (10, 100) selon une des revendications de 9 à 13, **caractérisé par le fait que** ledit premier nombre de saillies de centrage (12a) est égal à un nombre supérieur ou égal à trois ou substantiellement à un quart du nombre total de saillies (12).

15. Couplage de précision entre un arbre de la pompe (20, 200) et un élément creux (10, 100) selon une des revendications de 9 à 14, **caractérisé par le fait que** lesdites saillies (12) et lesdites saillies conjuguées (22) forment une dent à développante.

16. Couplage de précision entre un arbre de la pompe (20, 200) et un élément creux (10, 100) selon une des revendications de 9 à 15, **caractérisé par le fait que** ledit profil nervuré conjugué (21) dudit arbre de la pompe (20, 200) présent des respectives saillies conjuguées (22) réalisées avec un dimensionnement indifférencié.
